Europäisches Patentamt

European Patent Office

Office européen des brevets

(19)

(11) EP 0 863 413 B1

(12) FASCICULE DE BREVET EUROPEEN

(45) Date de publication et mention
de la délivrance du brevet:
**19.12.2001 Bulletin 2001/51**

(51) Int Cl.7: **G01V 8/10**, G06T 7/00

(21) Numéro de dépôt: **98400444.0**

(22) Date de dépôt: **24.02.1998**

(54) **Procédé et dispositif de localisation d'un objet dans l'espace**

Verfahren und Anordnung zur räumliche Lokalisierung eines Objekts

Method and apparatus for locating an object in space

(84) Etats contractants désignés:
**BE DE GB IT**

(30) Priorité: **28.02.1997 FR 9702426**

(43) Date de publication de la demande:
**09.09.1998 Bulletin 1998/37**

(73) Titulaires:
 • **COMMISSARIAT A L'ENERGIE ATOMIQUE**
 **75015 Paris (FR)**
 • **COMPAGNIE GENERALE DES MATIERES**
 **NUCLEAIRES**
 **78140 Velizy Villacoublay (FR)**

(72) Inventeurs:
 • **Viala, Marc**
 **78280 Guyancourt (FR)**
 • **Letellier, Laurent**
 **92260 Fontenay-Aux-Roses (FR)**

(74) Mandataire: **Ilgart, Jean-Christophe**
**c/o Société Brevatome, 3, rue du Docteur**
**Lanceraux**
**75008 Paris (FR)**

(56) Documents cités:
 **US-A- 5 207 003** **US-A- 5 611 000**

 • **OBERKAMPF D ET AL: "ITERATIVE POSE
 ESTIMATION USING COPLANAR FEATURE
 POINTS" COMPUTER VISION AND IMAGE
 UNDERSTANDING, vol. 63, no. 3, 1 mai 1996,
 pages 495-511, XP000597554**
 • **PATENT ABSTRACTS OF JAPAN vol. 095, no.
 007, 31 août 1995 & JP 07 098208 A
 (NIPPONDENSO CO LTD), 11 avril 1995,**
 • **PATENT ABSTRACTS OF JAPAN vol. 095, no.
 007, 31 août 1995 & JP 07 098214 A
 (NIPPONDENSO CO LTD), 11 avril 1995,**

EP 0 863 413 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention a trait à un procédé et un dispositif de localisation d'un objet dans l'espace tridimensionnel et elle peut trouver emploi dans de nombreux domaines tels que la robotique, la cartographie, l'aéronautique, etc. dans lesquels les déplacements d'un solide mobile de façon aléatoire doivent être repérés à des fins de mesure de position, de trajectographie, de contrôle de processus industriel ou de mesures de déformation.

Les solutions techniques pour effectuer de telles mesures ou de tels contrôles sont multiples, mais toutes ne sont pas faciles à mettre en oeuvre dans un environnement industriel qui peut être hostile en raison de températures et de pressions élevées ou de radioactivité. D'autre part, certaines d'entre elles ne sont pas capables de fournir des résultats rapidement et avec une précision suffisante.

Les procédés connus consistent généralement à équiper l'objet de cibles qui sont visées par un capteur et dont les positions à l'égard du capteur sont déterminées ; l'ensemble des positions des différentes cibles permet de déduire la position de l'objet, y compris son orientation. Les cibles usuelles sont de trois catégories : magnétiques, ultrasonores et optiques. Les premières consistent généralement en des bobines à fonctionnement pulsé pour produire des champs magnétiques, et les systèmes de ce genre sont complétés par des capteurs magnétiques qui déterminent les forces et les angles des champs. Mais on peut leur reprocher une grande latence de mesure, des limites de portée et des interférences que les bobines provoquent quand il y a des matériaux ferreux à l'intérieur des champs. Enfin, la localisation est peu précise.

Les cibles ultrasonores sont des émetteurs de séquences d'impulsions que reçoivent plusieurs capteurs afin de mesurer la distance entre chaque émetteur et chaque capteur et de déduire la position des émetteurs par des triangulations. Des inconvénients de ces solutions sont encore liés à un défaut de résolution, une faible précision et des risques d'interférences provoquées par les échos et d'autres bruits.

Les solutions optiques reposent sur l'observation de repères portés par l'objet et visibles par des caméras ou des moyens de prises d'images analogues. Quand plusieurs caméras sont prévues, une vision stéréoscopique de l'environnement et de l'objet est réalisée, ce qui permet de déduire la direction entre l'objet et chacune des caméras en examinant séparément la position des repères sur chacune des images, et de déduire la position de l'objet par une triangulation. Mais ces systèmes sont coûteux à cause de la multiplicité des caméras, qui doivent de plus être liées avec une grande précision pour que la qualité de localisation soit acceptable ; et la localisation est limitée à des objets présents dans des zones assez restreintes de l'espace, et plus précisément à l'endroit où les faisceaux des caméras d'observation se joignent, ce qui impose de démonter les caméras et de rajuster le système pour des observations à des distances différentes.

La localisation monoculaire repose sur l'emploi d'une seule caméra. Certaines méthodes de résolution sont analytiques et imposent de résoudre une équation ou un système d'équations pour déterminer les positions des repères à partir de leurs images. Elles sont rapides mais sensibles aux bruits de mesure.

Une autre catégorie est constituée par les résolutions itératives, dans lesquelles la position des repères de l'objet est estimée puis corrigée pour minimiser un critère d'erreur entre les images enregistrées par la caméra et les images qui seraient obtenues avec la position estimée des repères. Ces résolutions sont précises, peu sensibles aux bruits de mesure et permettent d'exploiter un nombre variable de repères, mais elles présentent l'inconvénient que la convergence peut être assez lente et que la première estimation doit être proche de la solution, faute de quoi la convergence n'est plus assurée.

Une solution est décrite dans l'article « Model-based object pose in 25 lines of code » par DeMenthon et Davis, paru dans International Journal of Computer Vision, vol.15, p.123-141, 1995 et consiste à obtenir une première estimation de la position des repères de l'objet par un algorithme approximatif mais simple à utiliser, puis à corriger l'estimation de position par un processus itératif dans lequel les estimations de position des repères sont projetées sur l'image de la caméra avant d'appliquer l'algorithme approximatif à ces projections pour donner de nouvelles estimations de position des repères plus précises que les précédentes.

L'invention appartient à la famille des méthodes optiques monoculaires et comprend l'utilisation d'un procédé de résolution itératif en utilisant un premier algorithme estimateur de position très proche de cet article ; mais elle se distingue en particulier par un meilleur algorithme d'estimation finale, moins sensible aux bruits de mesure, par une étape particulière d'amélioration de la détermination de la position des repères sur l'image, ainsi que par une nature des repères qui permet de satisfaire à l'exigence de précision dans la détermination finale de la position de l'image.

Sous sa formulation la plus générale, l'invention concerne un procédé de localisation dans l'espace d'un objet porteur de marques, consistant à déterminer des positions de traces des marques sur une image prise par un moyen de prise d'images, puis à calculer les positions des marques par rapport au moyen de prise d'images grâce aux positions des traces sur l'image, caractérisé en ce qu'il comprend une étape d'amélioration de détermination des positions des traces sur l'image en modélisant les traces par des fonctions de forme géométrique prédéterminées et en calculant les positions de la fonction de forme qui donnent la meilleure correspondance avec les traces. Cette modélisation permet d'estimer la position des traces avec une précision bien supérieure au pas de résolution du moyen de prise d'images, ce qui donne une excellente précision de localisation des marques même avec des images à basse résolution.

Le dispositif sujet du procédé conforme à l'invention comprend de préférence des marques réfléchissantes ou non, dépourvues de sources lumineuses, et le moyen de prise d'image prend l'aspect d'une caméra.

L'invention sera décrite plus en détail à l'aide des figures suivantes, qui exposent complètement une réalisation possible parmi d'autres :

- la figure 1 est une vue générale de l'invention ;
- la figure 2 illustre la technique de recherche des traces des marques de l'objet sur l'image ;
- les figures 3 et 4 illustrent une modélisation de trace ;
- et la figure 5 permet d'expliquer le procédé de localisation.

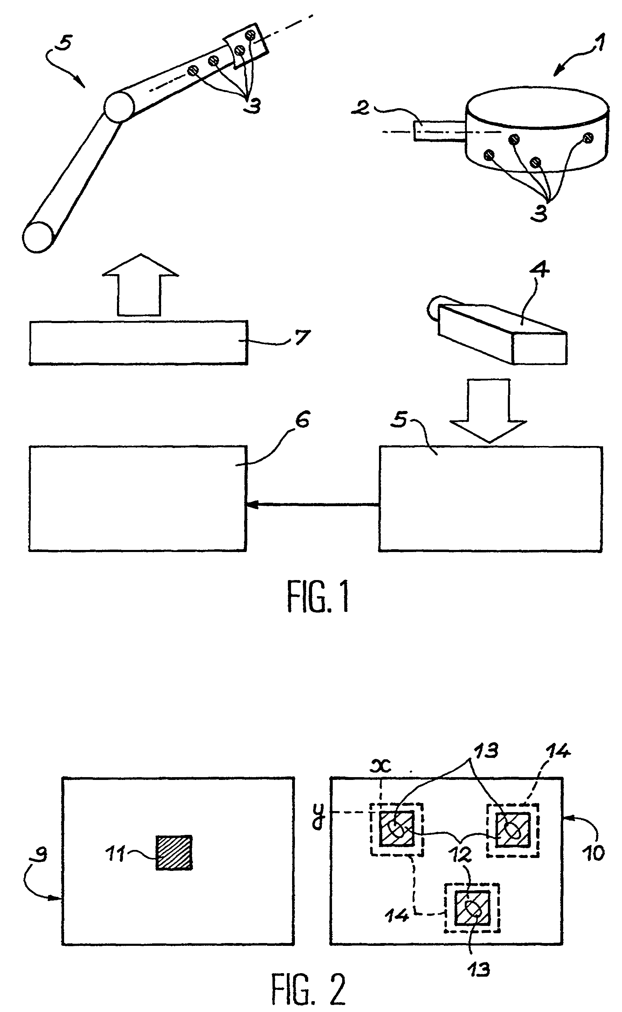

La figure 1 représente un objet qui peut être un outil 1 à saisir par une poignée 2 et qui porte des marques 3 sur une face tournée vers une vidéo-caméra 4 d'observation ; les marques 3 peuvent consister en des motifs de petite surface tels que des points de couleur ou qui réfléchissent la lumière environnante. Il n'est pas indispensable que les marques 3 soient à une orientation définie et immuable par rapport à la vidéo-caméra 4, mais elles peuvent au contraire être présentées obliquement à elle sans que la précision de détection soit compromise, ce qui permet d'appliquer l'invention à un nombre de situations beaucoup plus grand.

Ces marques passives sont franchement préférées aux marques lumineuses, généralement employées dans la technique et qui sont plus facilement visibles mais dont les contours sont moins nets, ce qui interdit de bien profiter de l'algorithme d'amélioration d'estimation de position décrit plus loin.

D'autres marques 3 équipent de même la surface d'un autre objet, à savoir un bras 5 de robot ou télémanipulé par un ordinateur et qui cherche à saisir la poignée 2. La vidéo-caméra 4 aide à l'approche de l'outil 1 en le localisant puis en localisant périodiquement le bras 5 pendant son mouvement, de façon à pouvoir donner à chaque fois la position relative des deux objets. La vidéo-caméra 4 est reliée à une unité de calcul 5 qui détermine ces renseignements et qui est elle-même reliée soit à un dispositif de commande du bras 5, soit, pour un bras télémanipulé, à une unité d'affichage 6 sous les yeux de l'opérateur, qui agit alors avec efficacité sur un poste de commande 7 du bras 5.

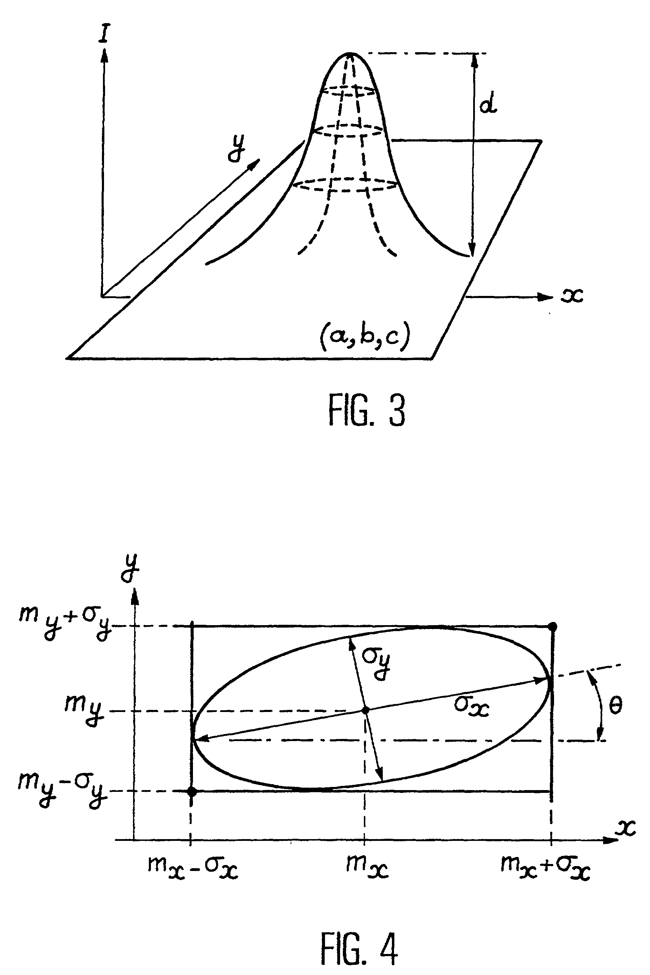

La première étape du procédé de localisation consiste à chercher la trace des marques 3 sur l'image prise par la vidéo-caméra 4. Il s'agit d'une étape d'identification d'imagettes ou portions d'image contenant chacune la trace d'une des marques 3. La figure 2 montre qu'on procède par une corrélation de l'image 10 de la vidéo-caméra 4 avec une image 9 d'étalonnage prise précédemment. Si on a constaté que la trace d'une des marques 3 était incluse dans le périmètre d'une portion ou imagette de référence 11 de l'image d'étalonnage 9, le programme de localisation crée successivement des imagettes 12 de même périmètre à des coordonnées x et y sur l'image 10 et calcule la corrélation C de l'intensité lumineuse des points des imagettes 11 et 12 selon la formule suivante (1) :

$$C(x, y) = \frac{Cov(M_o, M_k)}{\sigma(M_o)\sigma(M_k)} = \frac{E(M_oM_k) - E(M_o)E(M_k)}{\sqrt{E(M_o^2) - E(M_o)^2}\ \sqrt{E(M_k^2) - E(M_k)^2}} \quad (1)$$

où cov est la covariance, E est l'espérance mathématique et σ l'écart-type de l'intensité lumineuse. $M_o$ et $M_k$ représentant les contenus ou motifs lumineux des imagettes 11 et 12. Ce calcul est repris pour toutes les positions de l'imagette 12 en faisant varier x et y. Une table de corrélation de l'image 10 est alors obtenue, dont les points sont affectés d'un nombre compris entre -1 et +1, où -1 représente une anti-corrélation entre les motifs $M_o$ et $M_k$ pour les coordonnées x et y considérées, 0 une absence de corrélation et +1 une corrélation parfaite. Cette dernière situation apparaît quand l'imagette 12 est identique à l'imagette 11 de référence : la corrélation sert précisément à repérer les endroits de meilleure corrélation avec l'imagette 11 sur l'image 10 au moyen d'une lecture de la table de corrélation ; il est alors possible d'isoler un certain nombres d'imagettes 12 sur l'image 10, qui contiennent chacune la trace 13 d'une des marques 3 de l'objet visé. L'imagette 11 de référence peut être unique pour plusieurs imagettes 12 si les marques 3 sont identiques ; sinon, une imagette 12 est associée à une imagette 11 de référence respective.

Certaines précautions doivent cependant être prises pour rendre le procédé plus intéressant et plus sûr. Il faut en effet admettre que ces calculs de corrélation sont longs et coûteux. C'est pourquoi ils sont entrepris en réalité sur des images réduites, présentant simplement une sélection des points (pixels) de l'image originale. Du tableau de corrélation réduit ainsi obtenu on sélectionne les points correspondant à des imagettes candidates en plus grand nombre que les imagettes 12 recherchées. Les imagettes candidates sont l'objet d'une seconde sélection en réalisant une corrélation de vérification sur des imagettes candidates complètes, c'est-à-dire dans lesquelles on a réintégré tous les points écartés en construisant l'image réduite. Les imagettes 12 finalement retenues sont celles qui possèdent la meilleure corrélation de vérification avec l'imagette 11 de référence. Ces précautions permettent de se prémunir contre les risques d'erreur attachés aux conditions concrètes d'exploitation, où des lumières parasites ou d'autres artefacts peuvent induire le système en erreur et le pousser à identifier des traces 13 à ces endroits plutôt qu'aux véritables. De plus, les corrélations de vérification peuvent être calculées plusieurs fois pour chacune des imagettes 12, en les déplaçant à chaque fois dans le périmètre d'une fenêtre 14 de dimensions prédéterminées construite autour de chacune des imagettes candidates. C'est bien sûr la position de meilleure corrélation dans la fenêtre 14 qu'on retient pour définir l'imagette 12. Le risque de tronquer la trace 13 en la cadrant mal dans l'imagette 12 est alors très réduit.

Un élément important de l'invention consiste à estimer avec une grande précision la position des traces 13 des marques 3 sur les imagettes 12 : le procédé qui est proposé permet de faire une localisation sous-pixellique de cette position, c'est-à-dire avec une précision meilleure que la largeur d'un point de l'image. Il est alors possible d'obtenir des résultats de localisation satisfaisants de l'objet, même avec une vidéo-caméra 4 à faible résolution, moins coûteuse et dont l'exploitation des images est plus rapide. Il serait possible de se fonder sur le calcul de corrélation entre l'imagette 12 de la trace 13 et une image primitive telle que l'imagette 11 pour, par exemple, calculer la position du centre de la trace 13 sur l'imagette 12. Mais ce genre de méthode devient inopérant quand l'objet 1 a tourné et que ses marques 3 sont vues sous une incidence différente, qui les déforme sur l'imagette 12. C'est pourquoi il est proposé de modéliser les traces 13 sur l'imagette 12 par une formule telle que la suivante (2):

$$I(x, y) = a + bx + cy + d \, \exp\left(\frac{1}{2(1 - r_{xy}^2)}\left(\frac{(x - m_x)^2}{\sigma_x^2} + \frac{(y - m_y)^2}{\sigma_y^2} - \frac{(x - m_x)(y - m_y)}{\sigma_x \sigma_y}\right)\right) \quad (2)$$

où I est l'intensité lumineuse sur l'imagette 12, a, b, c et d sont des constantes dont les trois premières servent à estimer l'intensité lumineuse du fond de l'imagette 12, la dernière l'intensité lumineuse globale de la trace 13 ; $m_x$, $m_y$ expriment les coordonnées du centre de la trace 13, $\sigma_x$ et $\sigma_y$ ses largeurs dans des axes principaux qui peuvent être obliques par rapport aux axes principaux de l'imagette 12, et $r_{xy}$ exprime l'étalement de la trace.

D'un point de vue mathématique, a, b et c sont des coefficients d'un plan et d la hauteur d'une fonction gaussienne de section bidimensionnelle elliptique dont $m_x$ et $m_y$ sont les moyennes, $\sigma_x$ et $\sigma_y$ les écarts-types et $r_{xy}$ la corrélation. Les figures 3 et 4 en donnent une représentation graphique.

On voit que ce modèle tient compte du rétrécissement de la trace 13 sur l'imagette 12 consécutif à l'éloignement de la marque 3 et de sa déformation consécutive à la rotation de l'objet 1. Si on appelle $\hat{I}_{(xy)}$ l'intensité lumineuse mesurée sur les points de l'imagette, le travail consiste à minimiser la fonction $C_{min}$ de la formule (3) :

$$C_{min}(a, b, c, d, m_x, m_y, \sigma_x, \sigma_y, r_{xy}) = \sum_{x, y \in I}\left(I(x, y) - \hat{I}(x, y)\right)^2 \quad (3)$$

en faisant varier les variables de cette fonction, c'est-à-dire les paramètres de modélisation, pour que les intensités lumineuses données par celle-ci coïncident au mieux avec les valeurs mesurées. Une modélisation précise de la trace 13 est alors obtenue : on peut en particulier en déduire le centre par les valeurs de $m_x$ et $m_y$ et par conséquent, avec un étalonnage préliminaire des images de la vidéo-caméra 4 par photogrammétrie, la direction de la marque 3 associée à l'imagette 12 considérée par rapport à la vidéo-caméra 4.

Le modèle donné précédemment convient pour des marques 3 circulaires, mais il est facile de le transposer à des marques différentes de forme simple.

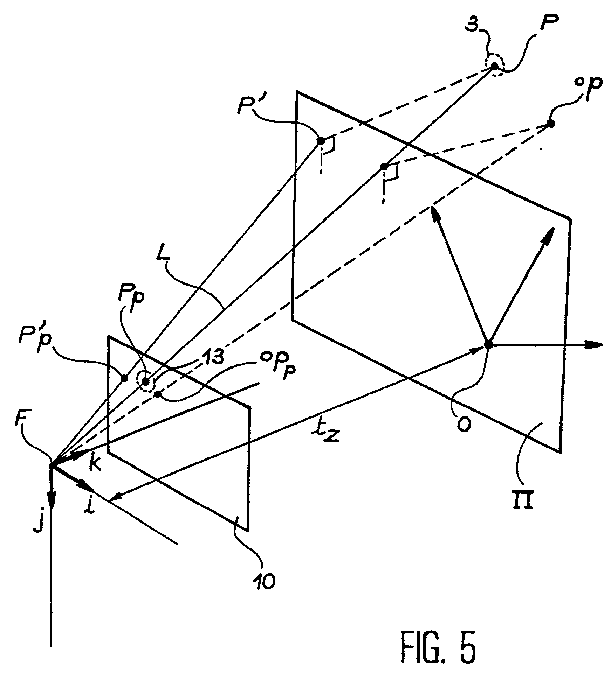

Il reste maintenant à déterminer la position des marques 3 par rapport à la vidéo-caméra 4. La figure 5 permettra de comprendre les explications qui suivent.

En supposant que les distorsions géométriques causées par l'objectif de la vidéo-caméra 4 ont été corrigées, ce qui peut aussi être fait par un étalonnage préliminaire de la vidéo-caméra 4 par photogrammétrie, le point P tel que le centre d'une marque 3 se trouve sur une ligne L de projection passant par le centre Pp de la trace correspondante 13 sur l'image 10 et par un foyer F. On appelle i, j et k les axes d'un repère de caméra dont le foyer F est l'origine, l'axe k étant perpendiculaire à l'image 10. Tous les points de l'espace perçus par la vidéo-caméra 4 se projettent sur l'image 10 par une ligne passant par le foyer F : cette projection convergente est appelée « en perspective ». La position des points Pp, centres des traces 13, est donc prévisible quand l'objet 1 occupe une position donnée dans le champ de la vidéo-caméra 4 ; le problème consiste à retrouver les relations de rétro-projection qui font passer des points Pp aux points P. Mais on constate que les relations rigoureuses de rétro-projection, obtenues en inversant les relations de projection permettant de calculer les coordonnées des points Pp par les coordonnées des points P, ne peuvent pas être exploitées facilement car elles ne consistent pas en un système d'équations linéaires.

C'est pourquoi on préconise de recourir à une première évaluation de la position des points P ; cette première évaluation est approximative mais elle peut être obtenue facilement et permet ensuite d'appliquer un procédé de convergence vers la solution réelle. Le principe retenu consiste à supposer que les points P se projettent sur l'image 10 en deux étapes, d'abord par une projection orthogonale sur un plan intermédiaire π parallèle au plan de l'image 10, en un point P', puis par une projection en perspective de ce point P' vers le foyer F, qui donne un point Pp' sur l'image 10. Ce point de projection fictive est à côté du point Pp de projection réelle. La première évaluation de la position des points P consiste à appliquer une rétro-projection, inverse de la projection fictive qu'on vient de décrire, aux points Pp de l'image 10 : les points ainsi obtenues sont notés °P.

Ce principe étant exposé, il faut détailler plus précisément les calculs entrepris.

La situation de l'objet 1 peut être représentée par une rotation R et une translation t conformes aux matrices suivantes (4), qui font passer du repère de la vidéo-caméra 4, défini plus haut, à un repère lié à l'objet 1 :

$$t = (t_x, t_y, t_z)^T$$

$$(4)$$

$$R = \begin{pmatrix} i_x & i_y & i_z \\ j_x & j_y & i_z \\ k_x & k_y & k_z \end{pmatrix} = \begin{pmatrix} i^T \\ j^T \\ k^T \end{pmatrix}$$

où $t_x$, $t_y$ et $t_z$ sont des coordonnées de translation exprimées dans les axes i, j et k du repère de la vidéo-caméra 4 et i, j et k sont les vecteurs directeurs du repère de la vidéo-caméra 4 exprimées dans le repère de l'objet 1.

Le plan π est choisi pour que l'origine O du repère de l'objet 1 lui appartienne, ce qui implique que le foyer F est distant du plan π de la grandeur $t_z$.

Si on appelle $°_x$, $°_y$ et $°_z$ les coordonnées du point P dans le repère de l'objet 1 et $\bar{u}$ et $\bar{v}$ les coordonnées du point P'p sur l'image 10, on peut obtenir les relations suivantes (5) :

$$\frac{i.\left(°x, °y, °z\right)^T + t_x}{t_z} = \bar{u}$$

$$(5)$$

$$\frac{j.\left(°x, °y, °z\right)^T + t_y}{t_z} = \bar{v}$$

Ces équations peuvent être généralisées à un nombre n de points P de l'objet 1 de la manière suivante (6) :

$$A \begin{pmatrix} I_1 \\ I_2 \\ I_3 \\ I_4 \end{pmatrix} = \bar{u}$$

$$A \begin{pmatrix} J_1 \\ J_2 \\ J_3 \\ J_4 \end{pmatrix} = \bar{v} \tag{6}$$

où les notations I, J, A, $\bar{u}$, $\bar{v}$ sont données par les équations que voici (7) :

$$\begin{cases} I_1 = i_x \, / \, tz \\ I_2 = i_y \, / \, tz \\ I_3 = i_z \, / \, tz \\ I_4 = t_x \, / \, tz \\ J_1 = j_x \, / \, tz \\ J_2 = j_y \, / \, tz \\ J_3 = j_z \, / \, tz \\ J_4 = t_y \, / \, tz \end{cases} \tag{7}$$

$$A = \begin{pmatrix} {}^{o}x_1 & {}^{o}y_1 & {}^{o}z_1 & 1 \\ \vdots & \vdots & \vdots & \vdots \\ {}^{o}x_n & {}^{o}y_n & {}^{o}z_n & 1 \end{pmatrix}$$

$$\bar{u} = \begin{pmatrix} \bar{u}_1 \\ \vdots \\ \bar{u}_n \end{pmatrix}$$

$$\bar{v} = \begin{pmatrix} \bar{v}_1 \\ \vdots \\ \bar{v}_n \end{pmatrix}$$

Il s'agit alors de calculer les quantités I et J, ce qui est effectué par les formules suivantes (8) :

$$\begin{pmatrix} I_1 \\ I_2 \\ I_3 \\ I_4 \end{pmatrix} = B\overline{u}' \qquad\qquad (8)$$

$$\begin{pmatrix} J_1 \\ J_2 \\ J_3 \\ J_4 \end{pmatrix} = B\overline{v}'$$

où la matrice B est la pseudo-inverse de A, c'est-à-dire que $B = (A^T A)^{-1} A^T$.

Le calcul des paramètres i, j, k et $t_x$, $t_y$, $t_z$ des matrices R et t est alors effectué de façon simple par la succession d'étapes suivantes :

- calcul des normes $n_I = \left\| (I_1, I_2, I_3)^T \right\|$ et $n_J = \left\| (J_1, J_2, J_3)^T \right\|$ ;
- calcul de la norme moyenne $n = (n_I + n_J)/2$ ;
- calcul de $i = (I_1, I_2, I_3)^T/n_I$ et de $j = (J_1, J_2, J_3)^T/n_J$ ;
- calcul de $k$ par le produit vectoriel des vecteurs $i$ et $j$ ;
- calcul de la composante $t_z = 1/n$ ;
- calcul de $t_x = I_4 t_z$ et de $t_y = J_4 t_z$.

Quand la position des points °P d'estimation de la position des points P a été ainsi obtenue par ces calculs, il convient de la corriger à cause de l'erreur de principe expliquée avec le commentaire de la figure 5. Les points °P sont projetés sur le plan de l'image 10 le long d'une ligne F dirigée vers le foyer F. Les coordonnées $\hat{u}$ et $\hat{v}$ du point de projection °Pp sont données par les formules (9) :

$$\frac{i.\left(°x, °y, °z\right)^T + t_x}{k.\left(°x, °y, °z\right)^T + t_z} = \hat{u}$$

$$(9)$$

$$\frac{j.\left(°x, °y, °z\right)^T + t_y}{k.\left(°x, °y, °z\right)^T + t_z} = \hat{v}$$

à comparer aux formules précédentes (5) approchées mais plus simples.

L'estimation définitive des paramètres de localisation de l'objet 1, c'est-à-dire des valeurs de coefficients des matrices R et t qui donnent la position et l'orientation du repère de l'objet 1, est obtenue en minimisant l'erreur quadratique entre les coordonnées $\overline{u}$ et $\overline{v}$ mesurées sur les points Pp de l'image 10 et les coordonnées $\hat{u}$ et $\hat{v}$ des projections °Pp, calculées par les formules précédentes (9), des points °P. On tient compte des incertitudes sur les coordonnées des points Pp estimés par la modélisation de la trace 13 (ces incertitudes sont représentées par une matrice $\Lambda$ de coefficients qui peuvent être estimés à l'avance). En d'autres termes, on cherche à minimiser la quantité $C_{min}$ donnée par la formule suivante (10) :

$$C_{min}(R, t) = \sum_{i=1}^{n} \left(\left(\overline{u}_i, \overline{v}_i\right) - \left(\hat{u}_i, \hat{v}_i\right)\right)^T \Lambda^{-1}\left(\left(\overline{u}_i, \overline{v}_i\right) - \left(\hat{u}_i, \hat{v}_i\right)\right) \qquad (10)$$

On agit par itérations, en déplaçant à chaque fois les points °P en fonction des positions de leurs projections

**EP 0 863 413 B1**

$^{\circ}P_p$ sur l'image 10, jusqu'à ce que ces projections aient suffisamment convergé vers les centres Pp des traces 13.

**Revendications**

1. Procédé de localisation dans l'espace d'un objet (1) porteur de marques (3), consistant à déterminer des positions de traces (13) des marques (3) sur une image (10) prise par un moyen de prise d'images (4), puis à calculer les positions des marques (3) par rapport au moyen de prise d'images (4) grâce aux positions des traces (13) sur l'image (4), **caractérisé en ce qu'**il comprend une étape d'amélioration de détermination des positions des traces (13) sur l'image (10) en modélisant les traces (13) par des fonctions de forme géométrique prédéterminées et en calculant les positions de la fonction de forme qui donnent la meilleure correspondance avec les traces, la correspondance étant calculée en minimisant une différence d'intensité lumineuse sur l'image entre la trace (13) et la fonction de forme géométrique, la fonction de forme géométrique comprenant une fonction gaussienne d'intensité lumineuse à paramètres variables.

2. Procédé de localisation selon la revendication 1, **caractérisé en ce que** les paramètres variables comprennent des paramètres de dimension de la forme géométrique.

3. Procédé de localisation selon la revendication 1 ou 2, **caractérisé en ce que** les paramètres variables comprennent des paramètres de déformation de la forme géométrique.

4. Procédé de localisation selon l'une quelconque des revendications 1 à 3, **caractérisé en ce que** la fonction de forme géométrique comprend une modélisation d'une intensité lumineuse de fond d'image.

5. Procédé de localisation selon l'une quelconque des revendications 1 à 4, **caractérisé en ce qu'**il comprend une étape de réduction de l'image (10), en ne conservant qu'une partie des points de l'image (10), puis de recherche des traces sur l'image réduite en la corrélant avec une image de référence (11), avant de mener l'étape d'amélioration de détermination des positions des traces en utilisant l'image non réduite.

6. Procédé de localisation selon l'une quelconque des revendications 1 à 5, **caractérisé en ce qu'**il comprend une extraction de portions (12) d'image (10) comprenant chacune une des traces (13) et un ajustement de position des portions d'image (12) dans des fenêtres (14) plus larges pour qu'elles englobent correctement les traces (13), en maximisant des corrélations des portions d'image (12) successivement ajustées en position et d'une image de référence (11) contenant une trace de marque avant de mener l'étape d'amélioration de détermination de position des traces.

7. Procédé de localisation selon l'une quelconque des revendications 1 à 6, **caractérisé en ce que** les positions des marques (3) sont calculées par un algorithme effectuant une rétro-projection des traces (13) sur un plan (π) parallèle à un plan de l'image (10) le long de lignes convergeant vers un foyer unique (F), puis dans l'espace, perpendiculairement audit plan parallèle.

8. Procédé de localisation selon la revendication 7, **caractérisé en ce que** les marques calculées par l'algorithme sont projetées par calcul sur le plan de l'image (10) le long de lignes convergeant vers le foyer (F), donnant des projections de vérification, et les positions des marques calculées sont corrigées pour minimiser un critère d'erreur entre les projections de vérification et les traces.

9. Dispositif pour mettre en oeuvre le procédé selon l'une quelconque des revendications précédentes, **caractérisé en ce que** les marques (3) sont dépourvues de source lumineuse et le moyen de prise d'images est une caméra (4).

**Patentansprüche**

1. Verfahren zum räumlichen Lokalisieren eines Marken (3) tragenden Objekts (1), das darin besteht, Positionen von Spuren (13) der Marken (3) auf einem durch eine Bildaufnahmeeinrichtung (4) erstellten Bild (10) zu bestimmen und dann die Positionen der Marken (3) in Bezug auf die Bildaufnahmeinrichtung (4) ausgehend von den Positionen der Spuren (13) auf dem Bild (4) zu berechnen, **dadurch gekennzeichnet, daß** es einen Schritt bzw. eine Phase der Verbesserung der Bestimmung der Positionen der Spuren (13) auf dem Bild (10) umfaßt, indem ein Modell für die Spuren (13) durch vorbestimmte Funktionen geometrischer Form erstellt wird und die Positionen der Form-

8

funktion, welche die beste Übereinstimmung mit den Spuren ergeben, berechnet werden, wobei die Übereinstimmung berechnet wird, indem eine Lichtstärkendifferenz auf dem Bild zwischen der Spur (13) und der Funktion geometrischer Form, die eine Gauss-Funktion der Lichtstärke mit variablen Parametern umfaßt, minimiert wird.

2. Verfahren zum Lokalisieren nach Anspruch 1, **dadurch gekennzeichnet, daß** die variablen Parameter Abmessungsparameter der geometrischen Form umfassen.

3. Verfahren zum Lokalisieren nach Anspruch 1 oder 2, **dadurch gekennzeichnet, daß** die variablen Parameter Verformungsparameter der geometrischen Form umfassen.

4. Verfahren zum Lokalisieren nach einem der Ansprüche 1 bis 3, **dadurch gekennzeichnet, daß** die Funktion geometrischer Form eine Modellbildung für die Lichtstärke des Bildhintergrunds umfaßt.

5. Verfahren zum Lokalisieren nach einem der Ansprüche 1 bis 4, **dadurch gekennzeichnet, daß** es einen Schritt der Reduzierung des Bildes (10) umfaßt, wobei nur ein Teil der (Bild-)Punkte des Bildes (10) beibehalten wird, gefolgt von einem Schritt der Spurensuche auf dem reduzierten Bild, indem es mit einem Referenzbild (11) in Korrelation gebracht wird, bevor der Schritt zum Verbessern der Bestimmung der Positionen der Spuren unter Verwendung des nicht-reduzierten Bildes ausgeführt wird.

6. Verfahren zum Lokalisieren nach einem der Ansprüche 1 bis 5, **dadurch gekennzeichnet, daß** es eine Extraktion von Teilen (12) des Bildes (10), von denen jeder eine der Spuren (13) umfaßt, und einen Positionsabgleich der Bildteile (12) in größeren Fenstern (14), damit diese die Spuren (13) korrekt einfassen, umfaßt, indem Korrelationen der sukzessive in der Position abgeglichenen bzw. angepassten Bildteile (12) und eines eine Markenspur enthaltenden Referenzbildes (11) maximiert werden, bevor der Schritt zum Verbessern der Bestimmung der Positionen der Spuren ausgeführt wird.

7. Verfahren zum Lokalisieren nach einem der Ansprüche 1 bis 6, **dadurch gekennzeichnet, daß** die Positionen der Marken (3) durch einen Algorithmus berechnet werden, der eine Rückprojektion der Spuren (13) auf eine Ebene ($\pi$) parallel zu einer Ebene des Bildes (10) längs von Linien, die zu einem einzigen Brennpunkt (F) konvergieren, und dann in den Raum senkrecht zu der parallelen Ebene vornimmt.

8. Verfahren zum Lokalisieren nach Anspruch 7, **dadurch gekennzeichnet, daß** die durch den Algorithmus berechneten Marken durch eine Rechenoperation auf die Ebene des Bildes (10) längs von zu dem Brennpunkt (F) konvergierenden Linien projiziert werden, um Prüfprojektionen zu ergeben, und daß die Positionen der berechneten Marken korrigiert werden, um ein Fehlerkriterium zwischen den Prüfprojektionen und den Spuren zu minimieren.

9. Vorrichtung zum Ausführen des Verfahrens nach einem der vorangehenden Ansprüche, **dadurch gekennzeichnet, daß** die Marken (3) keine Lichtquelle aufweisen und die Bildaufnahmeeinrichtung eine Kamera (4) ist.

**Claims**

1. Process for positioning an object (1) carrying marks (3) in space, consisting of determining the positions of traces (13) of marks (3) on an image (10) taken with a camera (4), and then calculating the positions of the marks (3) with respect to the camera (4) using the positions of the traces (13) on the image (4), **characterized in that** it comprises a step to improve the determination of the positions of the traces (13) on the image (10) by modelling the traces (13) using predetermined geometric shape functions and calculating the positions of the shape function that best correspond to the traces, the correspondence being calculated by minimizing a difference in light intensity on the image between the trace (13) and the geometric shape function, the geometric shape function including a Gaussian light intensity function with variable parameters.

2. Positioning process according to claim 1, **characterized in that** the variable parameters include parameters for the dimensions of the geometric shape.

3. Positioning process according to claim 1 or 2, **characterized in that** the variable parameters include parameters for the deformation of the geometric shape.

4. Positioning process according to any one of the claims 1 to 3, **characterized in that** the geometric shape function includes a model of the light intensity of the image background.

5. Positioning process according to any one of the claims 1 to 4, **characterized in that** it comprises a step in which the image (10) is reduced, using only some of the dots in the image (10), then searching for traces on the reduced image by correlating it with a reference image (11) before carrying out the step to improve the determination of the positions of traces using the complete image.

6. Positioning process according to any one of the claims 1 to 5, **characterized in that** it includes an extraction of portions (12) of image (10) each comprising one of the traces (13) and an adjustment of the position of image portions (12) in larger windows (14) so that they correctly surround the traces (13), maximizing correlations of image portions (12) successively adjusted in position and a reference image (11) containing a trace of a mark, before carrying out the step to improve the determination of the positions of the traces.

7. Positioning process according to any one of the claims 1 to 6, **characterized in that** the positions of marks (3) are calculated by an algorithm carrying out a reverse projection of traces (13) on a plane ($\pi$) parallel to a plane of the image (10) along lines converging towards a single focal point (F), and then perpendicularly to the said parallel plane in space.

8. Positioning process according to claim 7, **characterized in that** the marks calculated by the algorithm are projected onto the plane of the image (10) along lines converging towards the focal point (F) by calculations, to give check projections, and positions of the calculated marks are corrected to minimize an error criterion between the check projections and the traces.

9. Device for embodying the process according to any one of the preceding claims, **characterized in that** the marks (3) have no light source and that the image taking device is a camera (4).

FIG. 1

FIG. 2

FIG. 3

FIG. 4

FIG. 5